# EUROPEAN PATENT APPLICATION

(11) **EP 4 622 216 A1**
(43) Date of publication of application: **24.09.2025**
(21) Application number: 23890281.1
(22) Date of filing: 31.07.2023
(51) Int. Cl.: H04L 47/762

(54) **DETERMINISTIC RESOURCE SCHEDULING METHOD AND APPARATUS**

(30) Priority: 14.11.2022 CN 202211431156
(71) Applicant: ZTE CORPORATION, Shenzhen, Guangdong 518057 (CN)
(72) Inventor: XIONG, Quan, Shenzhen, Guangdong 518057 (CN); WU, Haisheng, Shenzhen, Guangdong 518057 (CN); LIU, Aihua, Shenzhen, Guangdong 518057 (CN)
(74) Representative: Carangelo, Pierluigi
(86) International application number: PCT/CN2023/110330
(87) International publication number: WO 2024/103842

(57) **Abstract**

Provided are a deterministic resource scheduling method and device. The method includes: according to a deterministic latency constraint policy, dividing a deterministic latency resource class; flooding the deterministic latency constraint information, and constructing a deterministic resource pool based on the deterministic resource class; constructing a scheduling path of the deterministic latency resource according to the deterministic resource pool, and allocating a resource.

## Description

### Cross-Reference to Related Application

This disclosure is based on Chinese patent application CN 202211431156.6, entitled "Deterministic Resource Scheduling Method and Apparatus", filed on 14 November 2022, and claiming priority to the Patent Application, the disclosure of which is incorporated herein by reference in its entirety.

### Technical Field

Examples of the present disclosure relate to the field of communications, and in particular, to a deterministic resource scheduling method and apparatus.

### Background

A deterministic network refers to a forwarding capability capable of providing guarantee of a deterministic Service-Level Agreement (SLA) in a network, and a main objective of a current stage is to support a deterministic low packet loss rate, a deterministic forwarding delay boundary and a deterministic jitter upper limit. In order to satisfy service requirements of deterministic services, etc., in order to implement a deterministic technology in an L3 layer, an IETF standard organization proposes a Deterministic Networking technology (DetNet), in which an RFC8655 defines a DetNet related technical architecture to provide a deterministic service for a two-layer bridge and a three-layer routing network, and a DetNet Quality of Service (QoS) requirement comprises a deterministic time delay upper limit, a low packet loss rate, and reducing jitter and high reliability, etc. The deterministic network employs resource reservation, explicit routing, and traffic protection to provide deterministic QoS.

However, in large-scale networking, the guarantee of Detnet QoS based on a flow or based on an aggregated flow cannot satisfy the requirement of scalability; meanwhile, the bearing requirement of deterministic services in a multi-user scenario in the industry is multi-dimensional, and deterministic quality indicators of different dimensions have different grades, resulting in that a deterministic network needs to satisfy differentiated DetNet QoS requirements. Hence, based on the above two reasons, it is necessary to classify deterministic services, to classify the deterministic QoS in the network, and to specify SLA indexes of different levels. Correspondingly, the deterministic network needs to ensure deterministic forwarding of different services according to the deterministic service level of the service.

While satisfying the diversified deterministic service requirements, the IP network also needs to consider network resource utilization. In order to effectively utilize network resources and improve network performance, it is necessary to construct a differentiated deterministic resource management and scheduling mechanism. The current standards and the prior art do not consider the class-based deterministic resource scheduling and management, let alone the protocol extension of the class-based deterministic resource, and cannot meet the differentiated service bearer requirements.

### Summary

Examples of the present disclosure provide a deterministic resource scheduling method and apparatus, so as to at least solve the problem in the related art that reasonable deterministic resource scheduling cannot be performed and multiple types of deterministic service requirements cannot be satisfied.

According to one example of the present disclosure, a deterministic resource scheduling method is provided. The method includes: according to a deterministic latency constraint policy, dividing a deterministic latency resource class; flooding the deterministic latency constraint information, and constructing a deterministic resource pool based on the deterministic resource class; constructing a scheduling path of the deterministic latency resource according to the deterministic resource pool, and allocating a resource.

According to another example of the present disclosure, a deterministic resource scheduling apparatus is provided. The apparatus includes: a resource classification module, configured to divide a deterministic latency resource class according to a deterministic latency constraint policy; a flooding module, configured to flood the deterministic latency constraint information, and construct a deterministic resource pool based on the deterministic resource class; a resource scheduling module, configured to construct a scheduling path of the deterministic latency resource according to the deterministic resource pool, and allocate a resource.

According to another example of the present disclosure, a computer readable storage medium is also provided. The computer readable storage medium stores a computer program, wherein the computer program is configured to execute the steps in any one of the method examples when running.

According to another example of the present disclosure, also provided is an electronic device, comprising a memory and a processor, wherein the memory stores a computer program, and the processor is configured to run the computer program so as to execute the steps in any one of the method examples.

### Brief Description of the Drawings

Figure 1 is a hardware structure block diagram of a computer terminal of a deterministic resource scheduling method according to an example of the present disclosure;
Figure 2 is a flowchart of deterministic resource scheduling according to an example of the present disclosure;
Figure 3 is a structural block diagram of an apparatus for determining resource scheduling according to an example of the present disclosure;
Figure 4 is a structural block diagram of a resource classification module according to an example of the present disclosure;
Figure 5 is a flowchart of deterministic resource scheduling according to an example of a scenario of the present disclosure;
Figure 6 is a schematic diagram of an IGP protocol extension principle according to an example of a scenario of the present disclosure;
Figure 7 is a schematic principle diagram of a deterministic latency constraint sub-sub-TLV according to a scenario example of the present disclosure;
Figure 8 is a schematic principle diagram of a deterministic jitter constraint sub-sub-TLV according to a scenario example of the present disclosure;
Figure 9 is a schematic principle diagram of deterministic class type object according to an example of a scenario of the present disclosure;
Figure 10 is a schematic diagram of deterministic network technology control according to an example of a scenario of the present disclosure;
Figure 11 is a schematic diagram of deterministic network technology control according to an example of the present disclosure scenario;
Figure 12 is a principle diagram of deterministic network technology control according to an example of a scenario of the present disclosure.

### Detailed Description of the Embodiments

Hereinafter, examples of the present disclosure will be described in detail with reference to the accompanying drawings and examples.

It should be noted that terms such as "first" and "second" in the description and claims of the embodiments of the present disclosure and the drawings are used to distinguish similar objects, and are not necessarily used to describe a specific sequence or order.

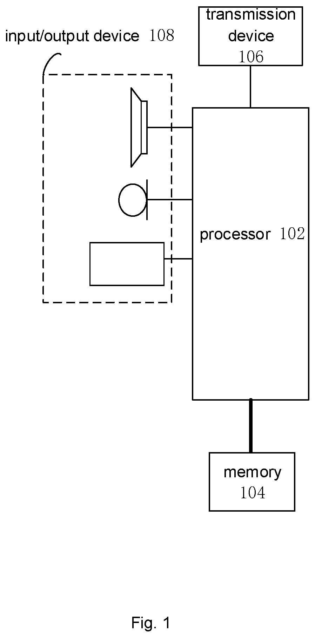

The method examples provided in the embodiments of the present application may be implemented in a mobile terminal, a computer terminal, or a similar computing apparatus. By taking running on a computer terminal as an example, figure 1 is a hardware structure block diagram of a computer terminal of a deterministic resource scheduling method according to an embodiment of the present disclosure. As shown in figure 1, the computer terminal may include one or more (only one is shown in figure 1) processors 102 (the processors 102 may include, but are not limited to, a microprocessor MCU or a processing apparatus such as a programmable logic device FPGA) and a memory 104 for storing data, wherein the computer terminal can further include a transmission device 106 and an input/output device 108 for a communication function. A person of ordinary skill in the art may understand that the structure shown in figure 1 is merely exemplary, which does not limit the structure of the foregoing computer terminal. For example, the computer terminal may further include more or less components than shown in figure 1, or have a different configuration from that shown in figure 1.

The memory 104 may be used for storing a computer program, for example, a software program and a module of application software, such as a computer program corresponding to the deterministic resource scheduling method in the embodiments of the present disclosure. The processor 102 runs the computer program stored in the memory 104, so as to execute various functional applications and data processing, that is, to implement the foregoing method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmission device 106 is used to receive or transmit data via a network. Specific examples of the described network may include a wireless network provided by a communication provider of the computer terminal. In one example, the transfer device 106 may comprise a Network Interface Controller (NIC) that may interface with other network devices via a base station to communicate with the Internet. In one example, the transmission device 106 may be a Radio Frequency (RF) module for communicating wirelessly with the Internet.

In order to effectively utilize network resources and improve network performance, it is necessary to construct a differentiated deterministic resource management and scheduling mechanism. The method comprises: admission control and negotiation: according to the usage of resources in a network, allowing a user to enter the network to transmit information and negotiate the QoS thereof. Resource reservation: in order to provide a satisfactory QoS for a user, corresponding resources, such as an end system, a router and a transmission bandwidth, must be reserved, so as to ensure that these resources are not used by other applications. Resource scheduling and management: after resources are reserved, whether the resources can be obtained is also dependent on a corresponding resource scheduling and management system. The network environment configured with QoS increases the predictability of network performance, can effectively allocate network bandwidth, and utilizes network resources more reasonably.

In the existing resource scheduling and management methods in the existing standards, the IETF DetNet technology proposed by the RFC8655 only considers the reservation of bandwidth resources, but only the reserved bandwidth cannot ensure the deterministic delay and jitter, and does not consider various services and various types of deterministic resource guarantees. The Multiprotocol Label Switching Differentiated Services (MPLS DiffServ-Aware) proposed by RFC4214 is based on the Traffic Engineering for Multiprotocol Label Switching, on the basis of MPLS-TE, category-based resource management is added, and resource usage conditions of each category are collected through an Internal Gateway Protocol (IGP), and a Traffic Engineering Database (TED) is separately established, a TED configured to establish a Label Switching Path (LSP) by carrying the type in a signaling protocol. Differentiated Services Traffic Engineering (DS-TE) makes full use of the expandability of DiffServ and the Explicit Routing capability of MPLS, and is an effective technology for solving the QoS of the backbone network, so that network resources can be optimally utilized according to the requirements of users. However, at present, DS-TE extends a cross-link traffic class (Class-Type) based on a bandwidth constraint condition by means of IGP, and what is scheduled is a bandwidth resource, which satisfies various service requirements of Diffserv; however, only classifying resource scheduling is performed on the bandwidth, and management and scheduling of resources, such as guaranteed deterministic delay jitter, are not considered, and various types of deterministic service requirements cannot be satisfied. The current standards and the prior art do not consider the class-based deterministic resource scheduling and management, let alone the protocol extension of the class-based deterministic resource, and cannot meet the differentiated service bearer requirements.

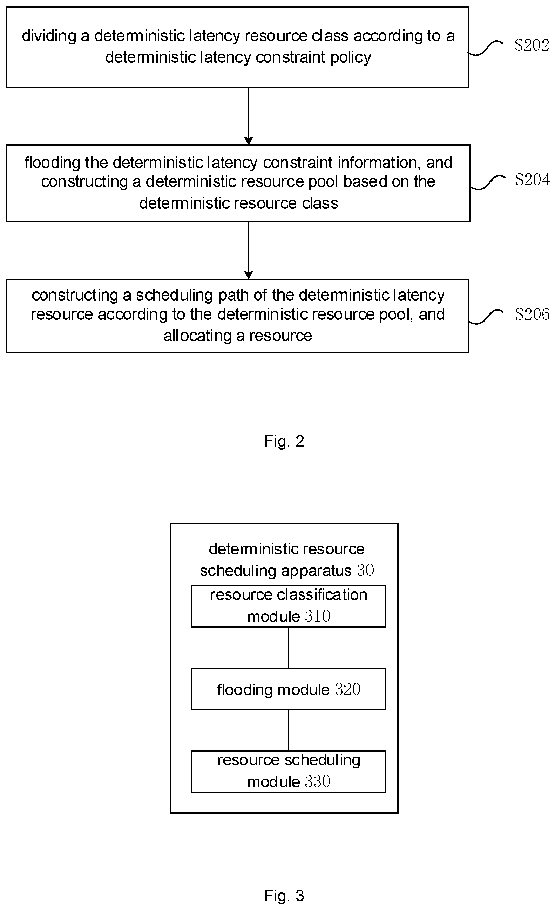

Provided in the present example is a deterministic resource scheduling method running on the described computer terminal or network architecture, figure 2 is a flowchart of a deterministic resource scheduling according to an example of the present disclosure. As shown in figure 2, the flow comprises the following steps:
Step S202, dividing a deterministic latency resource class according to a deterministic latency constraint policy;
Step S204, flooding the deterministic latency constraint information, and constructing a deterministic resource pool based on the deterministic resource class;
Step S206, constructing a scheduling path of the deterministic latency resource according to the deterministic resource pool, and allocating a resource.

By means of the described steps, a deterministic latency resource class is divided according to a deterministic latency constraint policy; flooding the deterministic latency constraint information, and constructing a deterministic resource pool based on the deterministic resource class; constructing a scheduling path of the deterministic latency resource according to the deterministic resource pool, and allocating a resource. The present invention solves the problem in the related art that reasonable deterministic resource scheduling cannot be performed and multiple classes of deterministic service requirements cannot be satisfied, and achieves the effects of reasonably scheduling the deterministic resources and satisfying different classes of deterministic service requirements.

The entity for performing the foregoing steps may be, but is not limited to, a base station or a terminal.

In one exemplary example, the deterministic latency constraint policy includes at least one of: an end-to-end jitter policy; a node latency policy; a packet loss policy.

In an exemplary example, dividing a deterministic latency resource class according to a deterministic latency constraint policy comprises: dividing a first-level class of the deterministic latency resource class according to the deterministic latency constraint policy, wherein the first-level class at least comprises one of the following: a Deterministic Jitter class-Type (DJT); deterministic Latency and Jitter class-Type (DLJT); Deterministic Latency class-Type (DLT); Bounded Latency class-Type (BLT); configuring one or more deterministic latency constraint policies for each of the first-level classes to divide each of the first-level classes into a plurality of second-level classes.

In an exemplary example, the method comprises: flooding the deterministic latency constraint information, and constructing a deterministic resource pool based on a deterministic resource class, comprises: flooding each class of the deterministic latency resource by using an interior gateway protocol (IGP), and collecting a usage condition of each class of deterministic latency resource, so as to construct the deterministic resource pool.

In an exemplary example, an IGP protocol is used to flood each class of the deterministic latency resource, comprises: extending the IGP protocol of the deterministic latency constraint information, and carrying one or more deterministic latency constraint, DLC, sub-TLVs used for indicating the deterministic latency constraint policy in the IGP protocol, wherein the information carried in the DLC sub-TLV at least comprises one of the following: a deterministic latency constraint model number with a byte length of 8 bits; a deterministic network bandwidth with a byte length of 32 bits(DetNet Bandwidth, DetNet BW).

In an exemplary example, a Type Length Value sub (sub-TLV) of a Deterministic Latency Constraint (DLC) carries one or more type length value sub-sub-TLVs, wherein the sub-sub-TLV comprises a Deterministic Delay Constraint (DDC) sub-sub-TLV, and the information carried in the DDC sub-sub-TLV at least comprises one of the following: a sub-sub-TLV serial number with a byte length of 8 bits; maximum delay of a node with a byte length of 32 bits; the minimum delay of a node with a byte length of 32 bits.

In an exemplary example, a deterministic latency constraint (DLC) sub-sub-TLV carries one or more sub-sub-TLVs, wherein the sub-sub-TLV comprises a deterministic jitter constraint (DJC) sub-sub-TLV, and the carrying information in the DJC sub-sub-TLV at least comprises one of the following: sub-TL numbers with a byte length of 8 bits; end-to-end maximum jitter with a byte length of 32 bits; end-to-end minimum jitter with a byte length of 32 bits.

In an exemplary example, the deterministic latency constraint information is flooded, and a deterministic resource pool based on a deterministic resource class is constructed, comprises: in the case where a controller exists, extending a Border Gateway Protocol Link State (BGP-LS), which carries a deterministic latency constraint (DLC) sub-sub-TLV in a node attribute Type Length Value (TLV) of the BGP-LS protocol, information about each class of deterministic resource class is reported to the controller via a BGP-LS protocol, so as to construct the deterministic resource pool.

In an exemplary example, a scheduling path of a deterministic latency resource is constructed according to the deterministic resource pool, and the resource is allocated. The scheduling path comprises: extending path computation element communication protocol, PCEP, or resource reservation protocol, RSVP, wherein the PCEP protocol or the RSVP protocol carries a deterministic class type object representation deterministic class identifier, constructing the scheduling path of the deterministic latency resource according to the deterministic class type object, and allocating a resource.

In an exemplary example, the carrying information of the deterministic class type object comprises at least one of the following: a deterministic class type (DT) with a byte length of 3 bits; a deterministic subtype with a byte length of 3 bits.

Through the description of the foregoing embodiments, a person skilled in the art may clearly understand that the method according to the foregoing examples may be implemented by software in addition to a necessary universal hardware platform, and definitely may also be implemented by hardware. However, in many cases, the former is a preferred implementation. Based on such understanding, the technical solutions of the examples of the present disclosure essentially or the part contributing to the prior art may be embodied in the form of a software product, the computer software product is stored in a storage medium (such as a ROM/RAM, a magnetic disk, and an optical disk), and includes several instructions for instructing a terminal device (which may be a mobile phone, a computer, a server, a network device, or the like).

A deterministic resource scheduling method is also provided in the present example. The apparatus is used for implementing the described embodiments and preferred implementations, and what has been described will not be elaborated. The term "module", as used hereinafter, is a combination of software and/or hardware capable of realizing a predetermined function. Although the apparatus described in the following example is preferably implemented by software, implementation of hardware or a combination of software and hardware is also possible and conceived.

Figure 3 is a structural block diagram of an apparatus for determining resource scheduling according to an embodiment of the present disclosure. As shown in figure 3, the deterministic resource scheduling apparatus 30 comprises: a resource classification module 310, configured to divide a deterministic latency resource class according to a deterministic latency constraint policy; a flooding module 320, configured to flood the deterministic latency constraint information and construct a deterministic resource pool based on the deterministic resource class; a resource scheduling module 330 is configured to construct a scheduling path of the deterministic latency resource according to the deterministic resource pool, and allocate a resource.

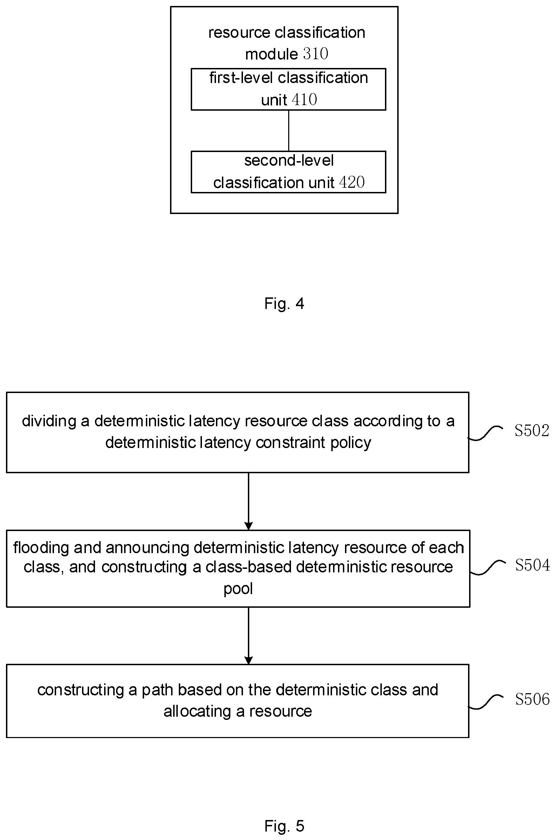

In an exemplary example, figure 4 is a structural block diagram of a resource classification module according to an example of the present disclosure. As shown in figure 4, the resource classification module 310 comprises: a first-level classification unit 410, configured to divide a first-level class of the deterministic latency resource class according to a deterministic latency constraint policy, wherein the first-level class at least comprises one of the following: a deterministic jitter class-type (DJT); deterministic latency and jitter class-type (DLJT); deterministic latency class-type (DLT); bounded latency class-type (BLT); a second-level classification unit 420, configured to configure one or more deterministic latency constraint policies for each of the first-level classes, so as to divide each of the first-level classes into a plurality of second-level classes.

It should be noted that each module may be implemented by software or hardware. The latter may be implemented in the following manner, but is not limited thereto. All the modules are located in a same processor; alternatively, the modules are located in different processors in an arbitrary combination.

Examples of the present disclosure further provide a computer readable storage medium. The computer readable storage medium stores a computer program. The computer program is configured to execute the steps in any one of the described method embodiments during running.

In an exemplary example, the computer readable storage medium may include, but is not limited to, any medium that can store a computer program, such as a USB flash drive, a Read-Only Memory (ROM), a Random Access Memory (RAM), a mobile hard disk, a magnetic disk, or an optical disc.

The examples of the present disclosure further provide an electronic device, comprising a memory and a processor. The memory stores a computer program. The processor is configured to run the computer program to execute the steps in any one of the method examples.

In an exemplary example, the electronic apparatus can further comprise a transmission device and an input/output device, wherein the transmission device is connected to the processor, and the input/output device is connected to the processor.

For specific examples in this example, reference may be made to the examples described in the foregoing embodiments and exemplary examples, and details are not repeatedly described in this example.

Obviously, those skilled in the art should understand that each module or each step of the above embodiments of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, examples of the present disclosure are not limited to any particular hardware and software combination.

In order to enable those skilled in the art to better understand the technical solutions of the examples of the present disclosure, descriptions will be given below with reference to specific scenario examples.

### Scenario example 1

According to the method for class-based deterministic resource management and scheduling provided in the examples of the present disclosure, dividing a deterministic latency resource class according to a deterministic latency constraint policy, and performing flooding and announcement on a deterministic latency resource of each class, constructing a class-based deterministic resource pool, constructing a deterministic class-based path and allocating a resource, and realizing class-based deterministic resource management and scheduling, meeting differential deterministic service classification and classification requirements.

Figure 5 is a flowchart of a deterministic resource scheduling according to a scenario example of the present disclosure. As shown in figure 5, the flow includes the following steps:
Step S502, dividing a deterministic latency resource class according to a deterministic latency constraint policy;

The extended DLC sub-sub-TLV is used for carrying a deterministic latency constraint policy, and an Deterministic Class Type (DT) is used for indicating a flow class based on the deterministic latency constraint condition and dividing a deterministic latency resource.

The deterministic latency resource includes a resource such as a bandwidth, a delay, and a delay variation (i.e. jitter). A deterministic latency constraint policy is used for dividing a deterministic latency resource. The policy may be in a plurality of manners, including but not limited to an end-to-end jitter policy, a node delay policy, and a packet loss policy. The network may divide one or more big clusters according to different deterministic latency constraint strategies, and may continue to divide one or more small clusters under each big cluster. The specific extension is as follows:

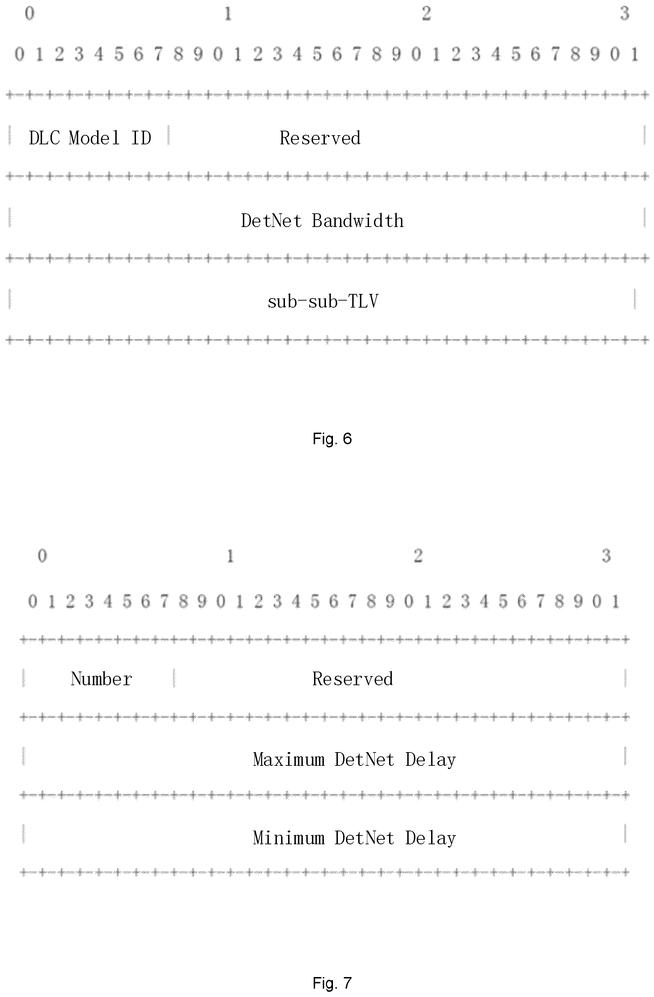

(1) Figure 6 is a schematic diagram of an IGP protocol extension principle according to an example of a scenario of the present disclosure. As shown in figure 6, the extended IGP protocol carries a (deterministic latency constraint data type) DLC sub-sub-TLV for indicating a deterministic latency constraint policy. The extended IGP protocol may include an Open Shortest Path First (OSPF) protocol or an Intermediate System to Intermediate System (IS-IS) protocol. In the OSPF protocol, a DLC sub-TLV may be carried in a Node Attribute TLV, and in the ISIS protocol, a DLC sub-TLV may be carried in an IS-IS Router CAPABILITY TLV.

As shown in figure 6, DLC Model Id, 8 bits are used to indicate different deterministic latency constraint models, such as a time-first-based deterministic resource scheduling model. Deterministic network technology bandwidth: 32 bits, indicating deterministic network bandwidth of the data link layer control DLC, i.e. node egress bandwidth or link bandwidth.

The above-mentioned sub-TLVs may carry one or more sub-sub-TLVs. The embodiment of this scenario proposes two sub-sub-TLV formats for respectively carrying a bandwidth, a deterministic delay or a jitter policy, etc., and the formats are as follows.

Figure 7 is a schematic principle diagram of a deterministic latency constraint sub-sub-TLV according to a scenario embodiment of the present disclosure, and as shown in figure 7, number: 8 bits is used for indicating the serial number of the sub-sub-TLV. Maximum DetNet Delay: 32 bits, indicating the upper limit of the maximum deterministic delay of the data link layer control DLC, i.e. the maximum delay of the node. Minimum DetNet Delay: 32 bits, indicating the lower limit of the minimum deterministic delay of the DLC, i.e. the minimum delay of the node.

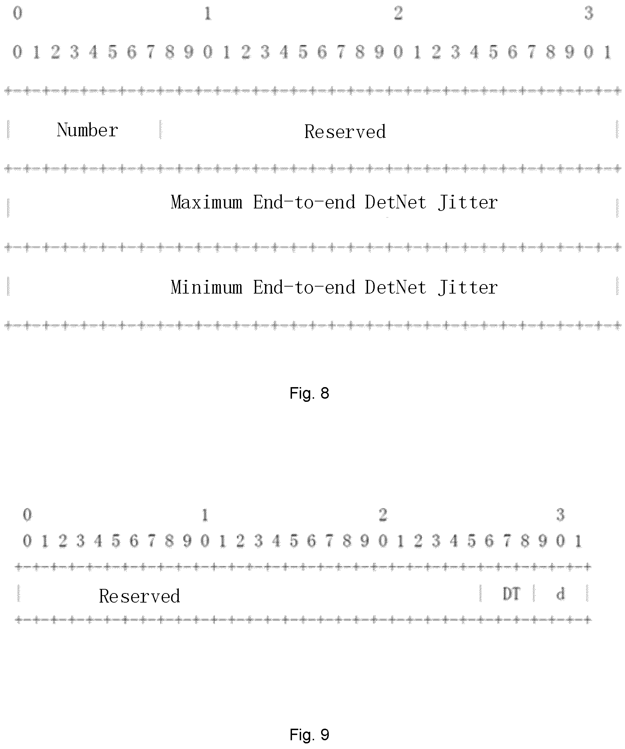

Figure 8 is a schematic diagram of the principle of a deterministic jitter constraint sub-sub-TLV according to a scenario embodiment of the present disclosure, and as shown in figure 8, number: 8 bits is used for indicating the serial number of the sub-sub-TLV. Maximum DetNet jitter: 32 bits, indicating the upper limit of the maximum deterministic jitter of the DLC, i.e. the end-to-end maximum jitter. Minimum DetNet jitter: 32 bits, indicating a minimum deterministic jitter lower limit of the DLC, i.e. the end-to-end minimum jitter.

(2) Extended DT (Deterministic Class Type) indicates a cross-node flow class based on a deterministic latency constraint, and is used for deterministic latency resource allocation, and is based on routing and admission control of the constraint. Examples of the present disclosure propose four DT classes, which are as follows:
DJT: indicates a low jitter assurance class.
DLJT: is used to indicate a low delay low jitter assurance class.
DLT: to indicate the low-latency guaranteed class.
BLT: is used for indicating a bounded delay upper limit class.

Each DT class can be further divided into a plurality of subtypes, and the maximum number of subtypes is N, wherein N can be configured. for example, DJT-0, DJT-1, DJT-d, etc., d < N.

Step S504: flooding and announcing deterministic latency resource of each class, and constructing a class-based deterministic resource pool.

In an exemplary example, a class-based deterministic resource TED is constructed using IGP (ISIS or OSPF protocol) flooding and collection of usage of various DT class resources. In a centralized scenario, the deterministic resource information of the class may also be reported to the controller through the BGP-LS protocol, and the DLC sub-TLV may also be carried in the Node Attribute TLV of the BGP-LS protocol as a TLV.

Step S506: constructing a path based on the deterministic class and allocating a resource.

In an exemplary example, a hybrid scenario may use a PCE to calculate a path based on a deterministic class, a distributed scenario may use an RSVP signaling protocol to construct a logic signal processing routine LSP based on the deterministic class, and a centralized scenario may use a controller to construct the LSP based on the deterministic class.

A Deterministic-Type object is extended, and is used for carrying a deterministic class of a DT class identifier LSP. The object may be carried in a path in a PCEP message for instructing a PCC to request the PCE for the deterministic class, and may also be carried in a path message of the RSVP for constructing the LSP based on the deterministic class. Figure 9 is a schematic diagram of a principle of deterministic class type object according to an embodiment of a scenario of the present disclosure. As shown in figure 9, DT: 3 bits to indicate the deterministic class, where four types have been defined, BLT = 1, DLT = 2, DJT = 3, DJT = 4. d:3 bits to indicate the deterministic subclass, d is in the range of <0-N-1>, the maximum number of subtypes Namifiable.

### Scenario example 2

In this scenario embodiment, the controller performs deterministic resource scheduling control in a centralized manner.

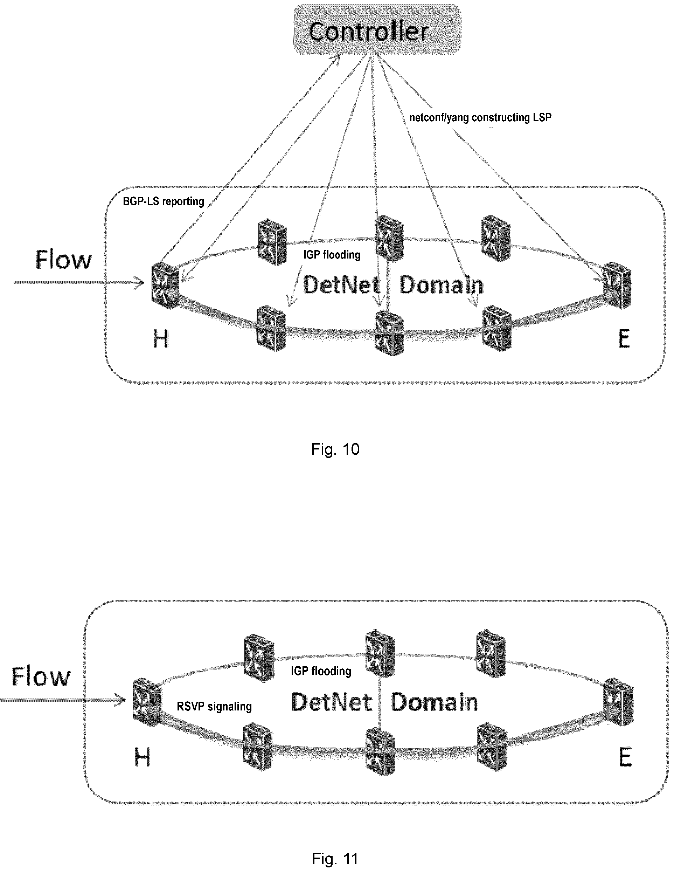

Figure 10 is a control principle diagram of a deterministic network technology according to a scenario embodiment of the present disclosure. As shown in figure 10, a device in a DetNet domain performs admission control through an IGP protocol, a controller interacts with the DetNet network through a netconf/yang protocol, nodes in the DetNet domain perform admission control through an IGP protocol to construct a resource TED, and an LSP is established centrally through the controller.

According to the deterministic network technology control principle shown in figure 10, the deterministic resource scheduling in this scenario example includes the following steps:
(1) Based on a deterministic latency constraint policy, such as an end-to-end jitter policy, a deterministic latency resource class is divided. By means of an IGP protocol, an extended DLC sub-TLV is used for carrying a deterministic latency constraint policy, and an extended DT is used for indicating a flow class based on the deterministic latency constraint condition, and dividing a deterministic latency resource, for example, dividing the deterministic resource DT into a deterministic jitter class-type (DJT), and then dividing same into four subtypes, as follows:
   DJT-1 DJC is 10G,0-10us
   DJT-2 DJC is 10G,10us-20us
   DJT-3 DJC is 10G,20us-30us
   DJT-4 DJC is 10G,30us-50us
(2) Flooding and announcing deterministic latency resources of each class, and constructing a class-based deterministic TED, flooding the deterministic latency resource class in the DetNet domain via the IGP protocol, and carrying the DLC sub-TLV via the BGP-LS to report the deterministic latency resource class information to the controller.
(3) A controller constructs a path based on a deterministic class and allocates a resource by using a centralized protocol such as netconf/yang, for example, an LSP of a DJT-1 subtype is constructed.

### Scenario example 3

In this scenario example, the controller adopts a distributed manner to schedule resources with certainty.

Figure 11 is a control principle diagram of a deterministic network technology according to an example of a scenario of the present disclosure. As shown in figure 11, a device in a DetNet domain performs admission control through an IGP protocol; in a full distributed scenario, a node in a DetNet domain performs admission control through an IGP protocol to construct a resource TED; and an LSP is established in a distributed manner through RSVP signalling through a distributed computing path of the node.

According to the deterministic network technology control principle shown in figure 11, the deterministic resource scheduling in this scenario embodiment includes the following steps:
(1) Based on a deterministic delay reduction policy, such as an end-to-end jitter policy, a deterministic latency resource class is divided. By means of an IGP protocol, an extended DLC sub-TLV is used for carrying a deterministic latency constraint policy, and an extended DT is used for indicating a flow class based on the deterministic latency constraint condition, and dividing a deterministic latency resource, for example, dividing the deterministic resource DT into a deterministic jitter class-type (DJT) and a deterministic latency class-type (DLT), and then dividing same into two sub-classes respectively, as follows:
   DJT-1 DJC is 1G,0us-10us
   DJT-2 DJC is 2G, 10us-20us
   DLT-1 DLC is 3G,0us-30us
   DLT-4 DLC is 4G, 30us-50us
(2) Flooding and announcing deterministic latency resources of each class, and constructing a class-based deterministic TED, flooding the deterministic latency resource class in the DetNet domain through the IGP protocol.
(3) A node calculates a path based on a deterministic class via the IGP, constructs an LSP via an RSVP protocol and allocates a resource, constructs an LSP of a BLT-1 subtype by carrying a DETERMINISTIC-TYPE object in a path message of the RSVP protocol, and allocates a corresponding resource.

### Scene example 4

In this scenario example, the controller uses a hybrid mode to schedule the deterministic resources.

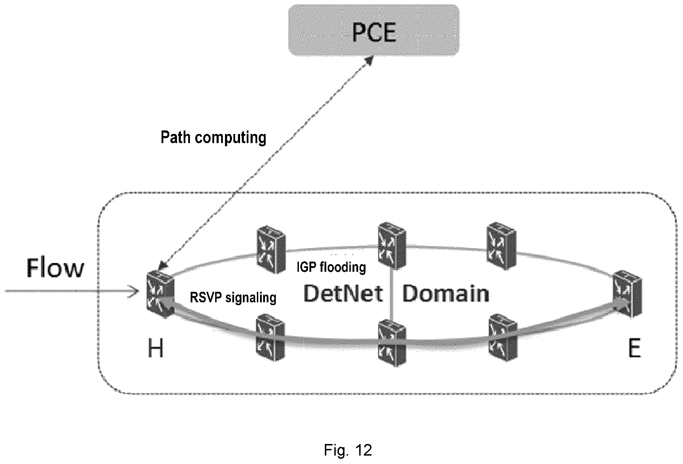

Figure 12 is a principle diagram of deterministic network technology control according to a scenario embodiment of the present disclosure. As shown in figure 12, a device in a DetNet domain performs admission control through an IGP protocol, and in a hybrid scenario, a node in a DetNet domain performs admission control through an IGP protocol to construct a resource TED, calculates a path through a PCE, and establishes an LSP in a distributed manner through RSVP signaling.

According to the deterministic network technology control principle shown in figure 12, the deterministic resource scheduling in this scenario embodiment includes the following steps:
(1) Dividing deterministic latency resources based on deterministic latency constraint policy, such as a node delay policy. According to an IGP protocol, a deterministic latency constraint data tag (DLC sub-TLV) is extended to carry a deterministic latency constraint policy, and the extended DT is used for indicating a flow class based on the deterministic latency constraint and dividing a deterministic latency resource, for example, dividing the deterministic resource DT into a Bounded Latency class-Type (BLT) and then dividing same into four subtypes, as follows:
   BLT-1 BLC is 1G,0us-10us
   BLT-2 BLC is 2G,0us-20us
   BLT-3 BLC is 3G,0us-30us
   BLT-4 BLC is 4G,0us-50us
(2) Flooding and announcing deterministic latency resources of each class, and constructing a class-based deterministic TED, determining the latency resource class in the DetNet domain and in the PCE flooding domain through the IGP protocol.
(3) A node calculates a path based on a deterministic class by means of a PCE, constructs an LSP and allocates a resource by means of an RSVP protocol, By extending the DETERMINISTIC-TYPE object of the PCEP protocol, a device and a controller, such as processing and control elements, are implemented, path computation information interaction of a deterministic class between PCEs, calculating a path of a BLT-1 subtype, and establishing an LSP of the BLT-1 sub-type by carrying a DETERMINISTIC-TYPE object in a PATH message of an RSVP, and allocating a corresponding resource.

In conclusion, the method and device for scheduling a deterministic resource provided by the embodiments of the present disclosure are based on a deterministic latency constraint policy, dividing a deterministic latency resource class, and performing flooding and announcement on a deterministic latency resource of each class, constructing a class-based deterministic resource pool, establishing a deterministic class-based path and allocating a resource, and realizing class-based deterministic resource management and scheduling, meeting differential deterministic service classification and classification requirements. A deterministic latency resource class is first divided based on a deterministic latency constraint policy. An extended DLC sub-TLV is used for carrying a deterministic latency constraint policy, and an extended DT is used for indicating a flow class based on the deterministic latency constraint condition and dividing a deterministic latency resource; then, a deterministic latency resource of each class is flooded and announced, and a class-based deterministic resource pool is constructed. Finally, a deterministic class based path is constructed and resources are allocated. Extended DETERMINISTIC-TYPE object is used to carry the DT class to identify the deterministic class of the LSP.

The above are only preferred examples of the examples of the present disclosure, and are not intended to limit the examples of the present disclosure. For those skilled in the art, the examples of the present disclosure may have various modifications and variations. Any modifications, equivalent replacements, improvements and the like made within the principle of the embodiments of the present disclosure shall fall within the scope of protection of the examples of the present disclosure.

## Claims

1. A deterministic resource scheduling method, comprising:
dividing a deterministic latency resource class according to a deterministic latency constraint policy;
flooding the deterministic latency constraint information, and constructing a deterministic resource pool based on the deterministic resource class;
constructing a scheduling path of the deterministic latency resource according to the deterministic resource pool, and allocating a resource.

2. The method according to claim 1, wherein the deterministic latency constraint policy at least comprises one of the following:
an end-to-end jitter policy;
a node latency policy;
a packet loss policy.

3. The method according to claim 1, wherein the dividing a deterministic latency resource class according to a deterministic latency constraint policy comprises:
dividing a first-level class of the deterministic latency resource class according to the deterministic latency constraint policy, wherein the first-level class at least comprises one of the following: a deterministic jitter class-type , DJT; deterministic latency and jitter class-type, DLJT; deterministic latency class-type, DLT; bounded latency class-type, BLT;
configuring one or more of the deterministic latency constraint policies for each of the first-level classes to divide each of the first-level classes into a plurality of second-level classes.

4. The method according to claim 1, wherein the flooding the deterministic latency constraint information and constructing a deterministic resource pool based on the deterministic resource class comprises:
using an interior gateway protocol , IGP, to flood each class of the deterministic latency resource, and collecting a usage condition of each class of the deterministic latency resource, so as to construct the deterministic resource pool.

5. The method according to claim 4, wherein the using an IGP to flood each class of the deterministic latency resource comprises:
extending the IGP protocol of the deterministic latency constraint information, and carrying one or more deterministic latency constraint, DLC, sub-TLVs used for indicating the deterministic latency constraint policy in the IGP protocol, wherein the information carried in the DLC sub-TLV at least comprises one of the following: a deterministic latency constraint model number with a byte length of 8 bits; a deterministic network bandwidth with a byte length of 32 bits.

6. The method according to claim 5, wherein,
the deterministic latency constraint, DLC, sub-TLV carries one or more sub-sub-TLVs, wherein the sub-sub-TLV comprises a deterministic delay constraint, DDC, sub-sub-TLV,
wherein, the information carried in the DDC sub-sub-TLV at least comprises one of the following: sub-sub-TLV serial number with a byte length of 8 bits; maximum delay of a node with a byte length of 32 bits; minimum delay of a node with a byte length of 32 bits.

7. The method according to claim 5, wherein,
the deterministic latency constraint, DLC, sub-TLV carries one or more sub-sub-TLVs, wherein the sub-sub-TLV comprises a deterministic jitter constraint, DJC sub-sub-TLV,
wherein, the information carried in the DJC sub-sub-TLV at least comprises one of the following: sub-sub-TL numbers with a byte length of 8 bits; end-to-end maximum jitter with a byte length of 32 bits; end-to-end minimum jitter with a byte length of 32 bits.

8. The method according to claim 1, wherein the flooding the deterministic latency constraint information to construct a deterministic resource pool based on the deterministic resource class comprises:
in the case where a controller exists, extending a border gateway protocol link state, BGP-LS, and carrying a deterministic latency constraint, DLC, sub-TLV in a node attribute TLV of the BGP-LS protocol, so as to report information about each class of the deterministic resource class to the controller via the BGP-LS protocol, and constructing the deterministic resource pool.

9. The method according to claim 1, wherein the constructing a scheduling path of the deterministic latency resource according to the deterministic resource pool and allocating a resource comprises:
extending path computation element communication protocol, PCEP, or resource reservation protocol, RSVP, wherein the PCEP protocol or the RSVP protocol carries a deterministic class type object representation deterministic class identifier, constructing the scheduling path of the deterministic latency resource according to the deterministic class type object, and allocating a resource.

10. The method according to claim 9, wherein the carrying information of the deterministic class type object comprises at least one of the following: a deterministic class type, DT, with a byte length of 3 bits; a deterministic subtype with a byte length of 3 bits.

11. A deterministic resource scheduling apparatus, comprising:
a resource classification module, configured to divide a deterministic latency resource class according to a deterministic latency constraint policy;
a flooding module, configured to flood the deterministic latency constraint information, and construct a deterministic resource pool based on the deterministic resource class;
a resource scheduling module, configured to construct a scheduling path of the deterministic latency resource according to the deterministic resource pool, and allocate a resource.

12. The apparatus according to claim 11, wherein the resource classification module comprises:
a first-level classification unit, configured to divide a first-level class of the deterministic latency resource class according to the deterministic latency constraint policy, wherein the first-level class at least comprises one of the following: a deterministic jitter class-type, DJT; deterministic latency and jitter class-type, DLJT; deterministic latency class-type, DLT; bounded latency class-type, BLT;
a second-level classification unit, configured to configure one or more of the deterministic latency constraint policies for each of the first-level classes, so as to divide each of the first-level classes into a plurality of second-level classes.

13. A computer readable storage medium, wherein the computer readable storage medium stores a computer program, and the computer program is configured to, when executed by a processor, cause the processor to implement the method according to any one of claims 1 to 10.

14. An electronic apparatus, comprising a memory, a processor, and a computer program stored in the memory and is executable by the processor, wherein the processor is configured to execute the computer program to implement the method as claimed in any one of claims 1 to 10.
